# EUROPÄISCHE PATENTSCHRIFT

(11) **EP 2 597 308 B1**
(45) Veröffentlichungstag und Bekanntmachung des Hinweises auf die Patenterteilung: **17.12.2014**
(21) Anmeldenummer: 12189664.1
(22) Anmeldetag: 24.10.2012
(51) Int. Cl.: F04B 9/04, F04B 49/12, F16N 7/38

(54) **Schaltbare Druckentlastung einer Schmiereinrichtung mit Kolbenpumpe**
Switchable pressure relief a lubricating device with piston pump
Détente commutable d'un dispositif de lubrification avec pompe à piston

(30) Priorität: 28.11.2011 DE 102011087221
(43) Veröffentlichungstag der Anmeldung: 29.05.2013
(73) Patentinhaber: Eugen Woerner GmbH & Co. KG, 97877 Wertheim (DE)
(72) Erfinder: Tiederle, Stefan, 97877 Wertheim (DE); Weber, Wolfgang, 97877 Wertheim (DE)
(74) Vertreter: DREISS Patentanwälte PartG mbB

(56) Entgegenhaltungen:
- DE-A1-102007 045 844
- DE-A1-102009 046 405
- DE-U1-202005 005 916

## Beschreibung

Die vorliegende Erfindung betrifft eine schaltbare Druckentlastung einer Schmiereinrichtung nach dem Oberbegriff des Anspruchs 1.

Exzenterantriebe für Radialkolbenpumpen oder andere Baugruppen, bei denen ein Kolben in eine oszillierende Bewegung versetzt werden soll, sind seit langem bekannt. Sie sind einfach aufgebaut, kostengünstig herstellbar und äußerst zuverlässig. Die DE 10 2005 048 567 B3 zeigt einen schaltbaren Exzenterantrieb einer Schmiereinrichtung, bei dem eine Exzenterwelle einen exzentrisch zu einer Drehachse der Exzenterwelle angeordneten Exzenterabschnitt aufweist, an dem eine Exzenterhülse drehbar gelagert ist. Die rotierende Exzenterhülse bewegt einen Kolben der Schmiereinrichtung. Durch eine Drehrichtungsumkehr der Exzenterwelle wird eine Förderung von Schmiermitteln durch die Schmiereinrichtung ein- bzw. ausgeschaltet.

Bei Schmiereinrichtungen, die als Einleitungs- oder Zweileitungssystem ausgebildet sein können, wird der Schmierstoff bedarfsabhängig mit Hilfe einer Kolbenpumpe in eine Förderleitung gefördert. Von der Förderleitung gelangt der Schmierstoff durch Verteiler an die eigentlichen Schmierstellen. Durch eine Druckentlastung der Förderleitung wird im Verteiler der Schmierstoff umgeschichtet (Einleitungsverteiler) bzw. wird durch den bei der Entlastung umgelenkten Druck ein Kolben in einer zweiten Förderleitung bewegt (Zweileitungsverteiler). Bei derartigen Schmiereinrichtungen soll nach der Förderphase die Druckentlastungsphase eingeleitet werden, in welcher unter Druck stehendes, überschüssiges Schmiermittel einem Schmiermittelvorratstank wieder zurückgeführt wird, damit auch das in der Leitung befindliche Schiermittel nicht zu lange unter Druck steht, da dieses dadurch in seiner Konsistenz verändert werden kann. Die Druckentlastung kann beispielsweise über elektrisch angesteuerte Wegeventile erfolgen. Dies geht, insbesondere bei der Verwendung von Fließfett oder Fett als Schmiermittel, mit hohen Kosten für die Ventile einher.

Alternativ zur elektrischen Ansteuerung der Wegeventile zeigt die WO 2006/108478 A1 eine Schmiereinrichtung, bei der eine Axialkolbenpumpe eine zusätzliche Steuerscheibe an einer Antriebswelle aufweist, über die mittels eines Kipphebelmechanismus ein Wegeventil zur Entlastung einer Förderleitung betätigt wird. So kann durch eine Änderung der Drehrichtung des Motors die Druckentlastung angesteuert werden. Diese Ansteuerung mit einer Steuerscheibe und einem Kipphebelmechanismus ist relativ kompliziert und aufwändig aufgebaut.

Die DE 691 10 991 T2 zeigt darüber hinaus eine schaltbare Druckentlastungseinrichtung einer Schmiereinrichtung mit einem Schmiermittelvorratstank und einer von einem Antriebsmotor antreibbaren Schmiermittelpumpe, wobei die Schmiereinrichtung über eine Förderleitung Schmiermittel fördert und die Schmiermittelpumpe von einer Antriebswelle angetrieben wird. Die Antriebswelle ist als Exzenterwelle mit einem exzentrisch zu einer Drehachse der Exzenterwelle angeordneten Exzenterabschnitt ausgebildet, wobei der Exzenterabschnitt einen drehrichtungsabhängigen Exzenterantrieb bildet und der Exzenterantrieb eine Druckentlastungseinrichtung betätigt.

Durch die DE 10 2007 045 644 A1 ist eine von einem Antriebsmotor antreibbaren Schmiermittelpumpe bekannt, die eine Schmiereinrichtung mit einem Schmiermittelvorratstank aufweist.Die Schmiereinrichtung fördert über eine Förderleitung Schmiermittel, wobei die Schmiermittelpumpe von einer Antriebswelle angetrieben wird. Die Antriebswelle ist als Exzenterwelle mit zwei exzentrisch zu einer Drehachse der Exzenterwelle angeordneten Exzenterabschnitten ausgebildet, wobei an jedem Exzenterabschnitt eine Exzenterhülse drehbar gelagert ist. Mindestens ein Exzenterabschnitt bildet dabei einen drehrichtungsabhängigen Exzenterantrieb.

Aufgabe der Erfindung ist es, mit einfachen Mitteln über eine mechanische Steuerung eine Förderung von Schmiermitteln durch die Schmiereinrichtung ein- und auszuschalten und beim Ausschalten gleichzeitig eine Druckentlastung in der Förderleitung einzuleiten.

Zur Lösung der Aufgabe wird vorgeschlagen, dass die aus der DE 10 2005 048 567 B3 bekannte Exzenterwelle um einen zweiten Exzenterabschnitt ergänzt wird. Der erste Exzenterabschnitt dient zum Antrieb des Pumpenkolbens, während der zweite Exzenterabschnitt anschließend die Wegeventile zur Druckentlastung ansteuert. Dabei ist erfindungsgemäß vorgesehen, dass die beiden Exzenterabschnitte in entgegengesetzten Drehrichtungen der Exzenterwelle aktiv sind. Unter 'aktiv' wird dabei verstanden, dass der Hub eines Exzenterabschnitts größer als null ist.

Der erfindungsgemäße Exzenterantrieb weist zwei baugleiche schaltbare Exzenterabschnitte auf, die für unterschiedliche Funktionen genutzt werden können. Dabei ist abhängig von der Drehrichtung der Exzenterwelle immer einer der beiden Exzenterantriebe aktiv. Somit kann durch die Umkehrung der Drehrichtung auf steuerungstechnisch einfachste Weise entweder die Förderung von Schmierstoff oder die Druckentlastung der Förderleitung angesteuert werden.

Die Exzenterwelle und die an der Exzenterwelle angeordneten Exzenterabschnitte, sind einfach herzustellende und langlebige Bauteile, wie z.B. Zylinder, Bohrungen oder Scheiben aus Metall, die einfach und kostengünstig hergestellt werden können. Der Exzenterabschnitt z.B. kann dabei einen zylindrisch ausgebildeten Bolzen umfassen, der außermittig auf der Exzenterwelle angeordnet ist.

In einer bevorzugten Ausführungsform ist vorgesehen, dass an dem jeweiligen Exzenterabschnitt eine Exzenterhülse drehbar gelagert ist, wobei die Exzenterhülse durch eine Drehung um den Exzenterabschnitt um einen Winkel von kleiner oder gleich 180° an einen ersten Anschlag in einer ersten Position relativ zur Drehachse der Exzenterwelle exzentrisch angeordnet ist, und durch Zurückdrehen der Exzenterwelle an einen zweiten Anschlag die Exzenterhülse in einer zweiten Position relativ zur Drehachse der Exzenterwelle konzentrisch angeordnet ist. Damit ist es möglich, durch die exzentrisch rotierende Exzenterhülse des ersten Exzenterabschnitts bspw. einen Antrieb eines oszillierenden Pumpenkolbens zu realisieren, wobei nach einem Umschalten auf die zweite Position der Pumpenkolben auf der konzentrisch rotierenden Exzenterhülse lediglich bewegungslos umläuft und keine oszillierende Bewegung mehr ausführt. Die Funktion ist mit der eines Freilaufs vergleichbar. Das Umschalten bewirkt also ein Ein- und Ausschalten der entsprechenden Funktion der Schmiereinrichtung.

Für die Erfindung ist es besonders vorteilhaft, dass der erste Exzenterabschnitt mit der entsprechenden Exzenterhülse der Förderung von Schmiermittel durch die Förderleitung dient und der zweite Exzenterabschnitt mit der entsprechenden Exzenterhülse einer Druckentlastung der Förderleitung dient. Da in der bevorzugten Ausführungsform die beiden Exzenterabschnitte wechselseitig aktiv sind, ist die Druckentlastung während der Förderphase ausgeschaltet; wird die Förderphase durch Umkehren der Drehrichtung der Exzenterwelle des schaltbaren Exzenterantriebs beendet, ist die Druckentlastung aktiv. Die Druckentlastung kann dabei z.B. derart realisiert werden, dass ein durch die Exzenterhülse oszillierender Kolben eine Druckentlastungseinrichtung schaltet, bspw. ein Entlastungsventil, mehrfach kurzeitig öffnet und schließt.

In einer Weiterbildung der Erfindung ist es möglich, dass die Schmiereinrichtung mehr als eine Förderleitung aufweist und jeder Förderleitung jeweils ein erster und ein zweiter Exzenterabschnitt mit der entsprechenden Exzenterhülse zugeordnet sind, wobei alle Exzenterabschnitte an der gleichen Exzenterwelle des schaltbaren Exzenterantriebs angeordnet sind. Die Schmiereinrichtung kann dabei bspw. derart realisiert sein, dass eine Exzenterhülse jeweils zwei Antriebselemente antreibt, so dass die erste Exzenterhülse der Förderung von Schmiermittel durch eine erste Förderleitung dient und gleichzeitig einer Druckentlastung der zweiten Förderleitung dient. Die zweite Exzenterhülse dient der Förderung von Schmiermittel durch die zweite Förderleitung und dient gleichzeitig einer Druckentlastung der ersten Förderleitung. Damit ist bspw. ein Zweileitungssystem realisierbar, bei der wechselseitig in den Leitungen Druck aufgebaut und entlastet wird.

Alle durch die Schmiereinrichtung zu bedienende Schmierstellen können durch die Anordnung an der gemeinsamen Exzenterwelle gleichzeitig geschmiert und gleichzeitig abgeschaltet werden, wobei nach der Abschaltung die Druckentlastungen für die entsprechenden Förderleitungen aktiv sind.

Weitere Merkmale und Vorteile der vorliegenden Erfindung werden nachfolgend anhand der Figuren näher erläutert. Dabei können die angegebenen Merkmale auch einzeln und in beliebiger, auch von der beschriebenen und dargestellten Kombination abweichenden Kombinationen Gegenstand der Erfindung sein. Es zeigen:
- Figur 1: eine schematische Darstellung einer Schmiereinrichtung aus dem Stand der Technik;
- Figur 2: einen Längsschnitt durch ein Pumpengehäuse mit einem erfindungsgemäßen schaltbaren Exzenterantrieb im Innern;
- Figur 3: ein Schnitt A : A aus Figur 2; und
- Figur 4: ein Schnitt B : B aus Figur 2.

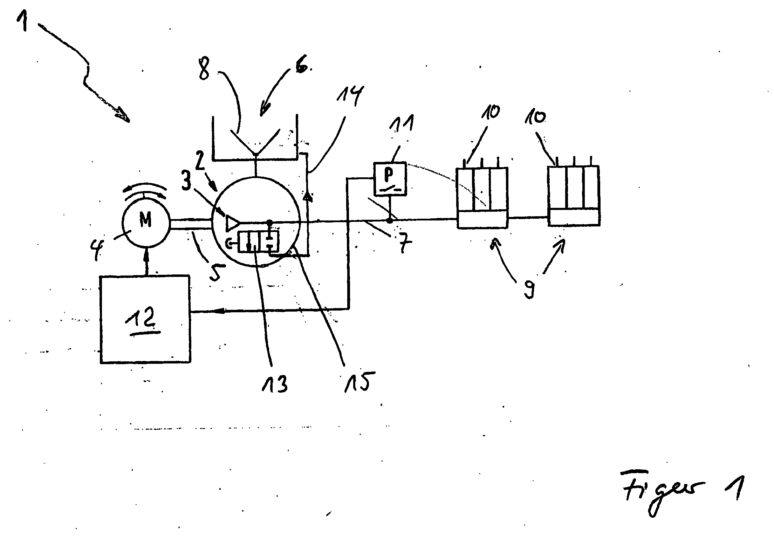

Figur 1 zeigt eine Schmiereinrichtung 1 mit einer Schmiermittelpumpe 2 (bspw. einer Radialkolbenpumpe), deren Pumpenelemente 3 von einem elektrischen Antriebsmotor 4 über bspw. einen oszillierenden Antriebskolben 5 betätigt werden, um Schmiermittel von einem Schmiermittelvorratstank 6 in eine Förderleitung 7 zu fördern. Der Antriebsmotor 4 weist dazu bspw. einen schaltbaren Exzenterantrieb auf (in Figur 1 nicht sichtbar), der mittelbar den Antriebskolben 5 bewegt. Der Schmiermittelvorratstank 6 kann zusätzlich eine Rührvorrichtung 8 aufweisen. Die Förderleitung 7 führt im dargestellten, beispielhaften Fall zu zwei Verteilern 9, von welchen entsprechende Versorgungsleitungen 10 zu den einzelnen Schmierstellen abzweigen.

In der Förderleitung 7 ist ein Druckschalter 11 vorgesehen, welcher beim Erreichen eines vorgesehenen maximalen Pumpendruckes die Schmiermittelförderung durch Aussenden eines entsprechenden Signals einer Steuerung 12 an den Antriebsmotor 4 beendet. Der Druckschalter 11 könnte auch durch eine Zeitschaltuhr ersetzt werden. Zur Förderung von Schmiermittel können auch mehrere Förderleitungen 7, die auch von unterschiedlichen Pumpenelementen 3 versorgt werden können, vorgesehen sein.

In einem Gehäuse 15 der Schmiermittelpumpe 2 ist im Innern eine Druckentlastungseinheit 13 zur Druckentlastung der Förderleitung 7 nach einer Förderphase von Schmiermittel angeordnet. An der Druckentlastungseinheit 13 ist eine Rückflussleitung 14 für Schmiermittel angeschlossen. Die Druckentlastungseinheit 13 verschließt die Rückflussleitung 14 in der Förderphase, bei welcher die Schmierstellen mit Schmiermittel versorgt werden sollen. In der anschließenden Druckentlastungsphase wird die Rückflussleitung 14 durch die Druckentlastungseinheit 13 geöffnet und das überschüssige Schmiermittel kann über die Rückflussleitung 14 entweichen Dadurch wird der Druck in der Förderleitung abgebaut.

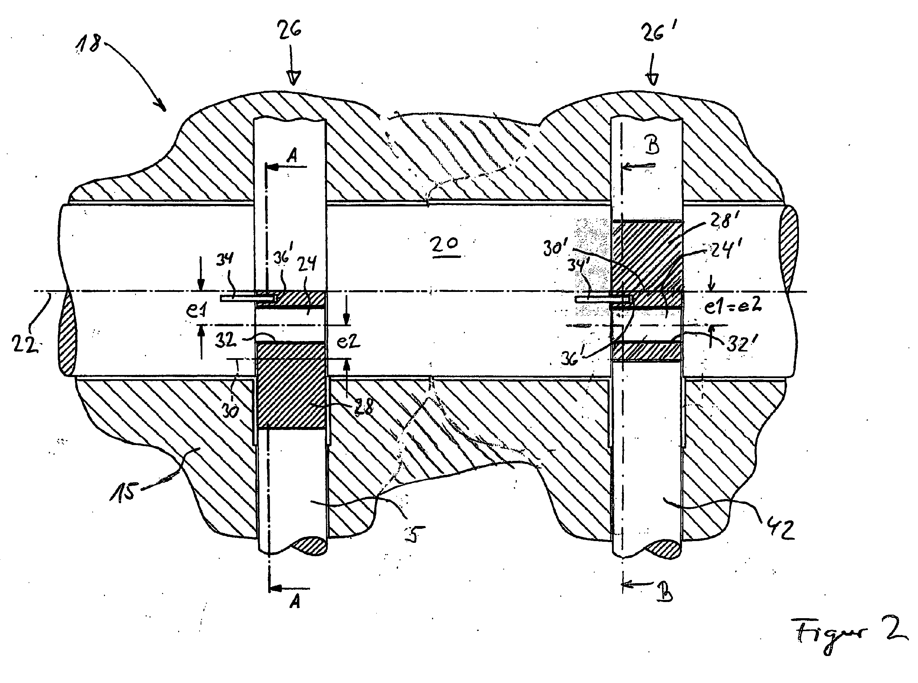

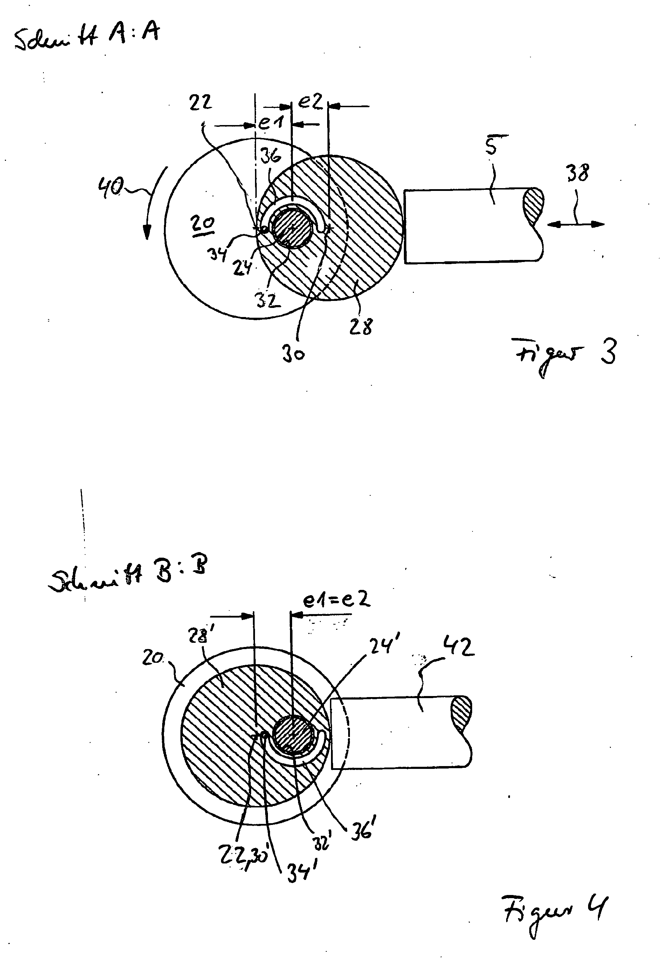

In Figur 2 ist ein Längsschnitt durch das Gehäuse 15 der erfindungsgemäßen Schmiermittelpumpe 2 im Detail dargestellt. Die Schmiermittelpumpe 2 weist einen erfindungsgemäßen schaltbaren Exzenterantrieb 18 auf. Die Figuren 3 und 4 zeigen zwei Schnitte durch den schaltbaren Exzenterantrieb 18.

In dem Gehäuse 15 ist eine Exzenterwelle 20 drehbar gelagert. Eine Drehachse der Exzenterwelle 20 ist mit dem Bezugszeichen 22 versehen. Die Exzenterwelle 20 weist zwei voneinander getrennt angeordnete und in aller Regel baugleiche Exzenterabschnitte 24 und 24' auf, die bspw. jeweils als ein Bolzen ausgebildet sind. Die Exzenterabschnitte 24 und 24' definieren an der Exzenterwelle 20 zwei unterschiedliche Funktionsebenen 26 und 26'. Die Exzentrizität der Exzenterabschnitte 24 und 24' bezüglich der Drehachse 22 ist mit e1 bezeichnet. An den Exzenterabschnitten 24 und 24' der Exzenterwelle 20 ist jeweils eine identisch ausgebildete Exzenterhülse 28 bzw. 28' drehbar gelagert, wobei eine Ausrichtung der jeweiligen Exzenterhülsen 28 und 28' auf der Exzenterwelle 20 entsprechend unterschiedlich ist. Nähere Information hierzu folgt weiter hinten. Die beiden Exzenterhülsen 28 und 28' können ebenso wie die Exzentrizitäten e1 auch unterschiedliche Abmessungen aufweisen.

Die Exzenterhülsen 28 und 28' haben eine kreisförmige Außenkontur, wie aus den Figuren 3 und 4 ersichtlich ist. Exzentrisch zu einer Mittelachse 30 der Exzenterhülse 28 (Funktionsebene 26) ist eine Bohrung 32 in der Exzenterhülse 28 vorhanden. Die Bohrung 32 hat den gleichen Durchmesser wie der Exzenterabschnitt 24 der Exzenterwelle 20 und dient als Lagerung der Exzenterhülse 28 auf dem Exzenterabschnitt 24. Die Exzentrizität der Bohrung 32 bezüglich der Mittelachse 22 der Exzenterhülse 28 ist mit e2 bezeichnet. In der in Funktionsebene 26 dargestellten Position addieren sich die Exzentrizität e1 des Exzenterabschnitts 24 und die Exzentrizität e2 der Exzenterhülse 28. Figur 3 zeigt zur besseren Verdeutlichung einen Schnitt durch die Funktionsebene 26.

In der Funktionsebene 26' ist die Exzenterhülse 28' um den Exzenterabschnitt 24' gedreht, und zwar in der Weise, dass die Drehachse 22 und eine Mittelachse 30' der Exzenterhülse 28' übereinander liegen. Es liegt damit keine Exzentrizität vor, weil sich die Exzentrizitäten e1 und e2 gegenseitig aufheben. Die Exzenterhülse 28' ist auf der Exzenterwelle 20 konzentrisch angeordnet. Figur 4 zeigt zur besseren Verdeutlichung einen Schnitt durch die Funktionsebene 26'.

Auf der Exzenterwelle 20 ist in der Funktionsebene 26 bzw. 26' jeweils ein Stift 34 bzw. 34' vorgesehen, der jeweils in eine kreisbogenförmige Nut 36 bzw. 36' der Exzenterhülse 28 bzw. 28' eingreift. Die Nut 36 bzw. 36' verläuft konzentrisch zu der Bohrung 32 bzw. 32' in der Exzenterhülse 28 bzw. 28' und umschließt einen Winkel von etwa 180°. Die Nuten 36 bzw. 36' und die Stifte 34 bzw. 34' haben die Funktion einer Drehwinkelbegrenzung und eines Anschlags und sorgen dafür, dass einerseits die Exzenterhülse 28 bzw. 28' nur um einen bestimmten Winkel relativ zu dem Exzenterabschnitt 24 bzw. 24' drehbar ist. Andererseits kann mit Hilfe der Stifte 34 bzw. 34' und der Nut 36 bzw. 36' ein Drehmoment von der Exzenterwelle 20 auf die jeweiligen Exzenterhülsen 28 bzw. 28' übertagen werden, um eine Rotation der Exzenterwelle 20 mitsamt den Exzenterhülsen 28 und 28' zu ermöglichen.

Sobald das Ende der Nut 36 bzw. 36' in Anlage an den Stift 34 bzw. 34' gelangt, wird die Relativbewegung zwischen der Exzenterwelle 20 und der Exzenterhülse 28 beendet und es wird das Drehmoment von der Exzenterwelle 20 auf die Exzenterhülsen 28 und 28' übertragen.

Zum Fördern von Schmiermittel in die entsprechenden Versorgungsleitungen 10 zu den einzelnen Schmierstellen ist die Funktionsebene 26 vorgesehen. Figur 3 zeigt die entsprechende Situation. Dazu liegt der Antriebskolben 5 der Schmiermittelpumpe 2 am Außendurchmesser der exzentrisch auf der Exzenterwelle 20 positionierten Exzenterhülse 28 auf und wird bspw. durch eine nicht dargestellte Feder in Anlage an der Exzenterhülse 28 gehalten. Durch Drehen der Exzenterwelle 20 bspw. entgegen des Uhrzeigersinns (vgl. Bezugszeichen 40 in Figur 3) wird über den Stift 34 das Drehmoment von der Exzenterwelle 20 auf die Exzenterhülse 28 übertragen, wodurch der Antriebskolben 5 in eine oszillierende Bewegung (vgl. Bezugszeichen 38 in Figur 3) versetzt wird. Ein Hub H des Antriebskolbens 5 berechnet sich dabei aus H = 2 * (e1 + e2).

Bei dem in Figur 2 dargestellten Ausführungsbeispiel ist die Exzentrizität e1 des Exzenterabschnitts 24 bzw. 24' gleich groß wie die Exzentrizität e2 der Exzenterhülse 28 bzw. 28'. Dies muss jedoch nicht immer so sein.

Die Funktionseben 26' ist zur Druckentlastung der Förderleitung 7 vorgesehen. Dazu schlägt der Stift 34' relativ zur Anordnung des Stifts 34 der Funktionsebene 26 am entgegengesetzten Ende der Nut 36' an. Das heißt, dass in der in Figur 3 und 4 dargestellten Position, der Stift 34 zum Stift 34' am entgegengesetzten Ende der jeweiligen Nut anschlägt. Figur 4 zeigt die entsprechende Situation in der Funktionsebene 26'. Die Exzenterhülse 28' ist durch die beschriebene Anordnung in der Funktionsebene 26' konzentrisch zur Drehachse 22 der Exzenterwelle 20 angeordnet. In der Funktionsebene 26' liegt ein Betätigungselement 42 für die Druckentlastungseinheit 13 an der Exzenterhülse 28' federnd auf. In der in Figur 4 dargestellten Position wird durch die Stellung der Exzenterhülse 28' das Betätigungselement 42 nicht bewegt, da die Exzentrizität e1 des Exzenterabschnitts 24' und die Exzentrizität e2 der Exzenterhülse 28' sich in dieser Position subtrahieren. Somit beträgt der Hub H des Betätigungselements 42 H = 2 * (e1 - e2) = 0, was in der Förderphase der Funktionsebene 26 gewünscht ist. Die Funktion ist mit der eines Freilaufs vergleichbar.

Wird nun die Drehrichtung der Exzenterwelle 20 des mechanisch schaltbaren Exzenterantriebs 18 umgekehrt, wandern die Stifte 34 und 34' jeweils an das entgegengesetzte Ende der Nut 36 bzw. 36'. Infolgedessen dreht sich die Exzenterhülse 28 und 28' um ca. 180° relativ zu der Exzenterwelle 20. Das bedeutet, dass jetzt in Funktionsebene 26 kein Hub zum Oszillieren des Antriebskolbens 5 erzeugt wird, da keine Exzentrizität an der Kontaktfläche zwischen Exzenterhülse 28 und dem Antriebskolben 5 auftritt. Die Exzenterhülse 28 ist nun im Freilauf. Infolgedessen führt der Antriebskolben 5 trotz einer Drehung der Exzenterwelle 20 keine oszillierende Bewegung aus. Die Förderung von Schmiermittel ist damit abgeschaltet.

Gleichzeitig wird in der Funktionsebene 26' die Exzenterhülse 28' exzentrisch auf der Exzenterwelle 20 angeordnet, so dass eine oszillierende Bewegung des Betätigungselements 42 der Druckentlastungseinheit 13 erzeugt wird. Das Betätigungselement 42 öffnet dabei zum Beispiel ein in der Förderleitung 7 angeordnetes Entlastungsventil mehrfach kurzzeitig, wobei unter Druck stehendes, überschüssiges Schmiermittel in der Förderleitung 7 dem Schmiermittelvorratstank 6 wieder über die Rückflussleitung 14 zurückgeführt wird. Die Druckentlastung ist aktiv. Durch den erfindungsgemäßen Exzenterantrieb 18 ist die Druckentlastung immer dann eingeschaltet, wenn der Förderbetrieb der Schmiermittelpumpe 2 ausgeschaltet ist. Umgekehrt, ist der Förderbetrieb eingeschaltet, so ist die Druckentlastung ausgeschaltet.

Das Entlastungsventil der Druckentlastungseinheit 13 könnte dabei über das Betätigungselement 42 direkt oder über einen zusätzlichen Stift betätigt werden, der das Entlastungsventil schaltet. Auch möglich ist, dass das Betätigungselement 42 direkt oder über einen zusätzlichen Kolben die Rückflussleitung 14 in der Funktion eines Wegeventils öffnet. Weiterhin ist möglich, dass das Entlastungsventil ähnlich einem normalen Pumpenelement, aber ohne Rückschlagventil, ausgebildet ist. Der Verschluss erfolgt dann durch das Betätigungselement 42, das einen Dosierkolben des Pumpenelementes betätigt.

In einer nicht dargestellten Ausführungsform ist es möglich, dass jede Funktionsebene 26, 26' sowohl mit einem Antriebskolben 5 zum Fördern von Schmiermittel als auch mit einem Betätigungselement 42 für die Druckentlastungseinheit 13 ausgestattet ist. Das bedeutet, dass die Schmiereinrichtung zwei Förderleitungen 7 zum Fördern von Schmiermittel aufweist und damit ein Zweileitungssystem darstellt. Dabei gilt bspw. für eine erste Förderleitung 7, dass die Funktionsebene 26 Schmittmittel fördert, die Funktionsebene 26' realisiert die Druckentlastung. Für eine zweite Förderleitung 7 gilt dann, dass die Funktionsebene 26' Schmittmittel fördert, die Funktionsebene 26 die Druckentlastung realisiert. Damit wird die Funktion des Zweileitungssystems gewährleistet, bei der wechselseitig in den Leitungen Druck aufgebaut und entlastet wird.

In einer weiteren nicht dargestellten Ausführungsform ist es möglich, dass die Exzenterwelle 20 des schaltbaren Exzenterantriebs 18 mehr als zwei Funktionsebenen aufweist. Die beiden Funktionsebene 26 und 26' könnten bspw. dupliziert werden, so dass ein Zweileitungssystem entsteht. Auch hier wird die Funktion des Zweileitungssystems gewährleistet, bei der wechselseitig in den Leitungen Druck aufgebaut und entlastet wird. Jede Förderleitung kann über das oben beschrieben Verfahren Schmiermittel fördern und beim Ausschalten der Förderung druckentlastet werden.

## Patentansprüche

1. Schaltbare Druckentlastungseinrichtung (18) einer Schmiereinrichtung (1) beinhaltend einen Schmiermittelvorratstank (6) und eine von einem Antriebsmotor (4) antreibbare Schmiermittelpumpe (2), wobei die Schmiereinrichtung (1) über mindestens eine Förderleitung (7) Schmiermittel fördert, wobei die Schmiermittelpumpe (2) von einer Antriebswelle angetrieben wird, wobei die Antriebswelle als Exzenterwelle (20) mit einem exzentrisch zu einer Drehachse (22) der Exzenterwelle (20) angeordneten Exzenterabschnitt (24, 24') ausgebildet ist und die Exzenterwelle (20) eine Druckentlastungseinrichtung (13) betätigt, **dadurch gekennzeichnet, dass** die Exzenterwelle (20) mindestens zwei Exzenterabschnitte (24, 24') aufweist, wobei an jedem Exzenterabschnitt (24, 24') eine Exzenterhülse (28, 28') drehbar gelagert ist, und die Exzenterhülse (28, 28') mit dem jeweiligen Exzenterabschnitt (24, 24') den drehrichtungsabhängigen Exzenterantrieb (18) bilden.

2. Schaltbare Druckentlastungseinrichtung (18) nach Anspruch 1, **dadurch gekennzeichnet, dass** längs der Exzenterwelle (20) ein erster und ein zweiter Exzenterabschnitt (24, 24') sowie eine erste und eine zweite Exzenterhülse (28, 28') angeordnet sind, die einen ersten und einen zweiten Exzenterantrieb (18) bilden, und dass der erste und der zweite Exzenterantrieb (18) in verschiedenen Drehrichtungen der Exzenterwelle aktiv sind.

3. Schaltbare Druckentlastungseinrichtung (18) nach Anspruch 1 oder 2, **dadurch gekennzeichnet, dass** an dem jeweiligen Exzenterabschnitt (24, 24') eine Exzenterhülse (28, 28') drehbar gelagert ist, wobei die Exzenterhülse (28, 28') durch eine Drehung um den Exzenterabschnitt (24, 24') um einen Winkel von kleiner oder gleich 180° an einen ersten Anschlag in einer ersten Position relativ zur Drehachse (22) der Exzenterwelle (20) exzentrisch angeordnet ist, und durch Zurückdrehen der Exzenterwelle (20) an einen zweiten Anschlag die Exzenterhülse (28, 28') in einer zweiten Position relativ zur Drehachse (22) der Exzenterwelle (20) konzentrisch angeordnet ist.

4. Schaltbare Druckentlastungseinrichtung (18) nach Anspruch 1, 2 oder 3, **dadurch gekennzeichnet, dass** der erste Exzenterabschnitt (24) mit der entsprechenden Exzenterhülse (28) der Förderung von Schmiermittel durch die Förderleitung (7) dient und der zweite Exzenterabschnitt (24') mit der entsprechenden Exzenterhülse (28') einer Druckentlastung der Förderleitung (7) dient.

5. Schaltbare Druckentlastungsenrichtung (18) nach Anspruch 4, **dadurch gekennzeichnet, dass** bei eingeschalteter Funktion des ersten Exzenterabschnitts (24) die Funktion des zweiten Exzenterabschnitts (24') ausgeschaltet ist und bei ausgeschalteter Funktion des ersten Exzenterabschnitts (24) die Funktion des zweiten Exzenterabschnitts (24') eingeschaltet ist.

6. Schaltbare Druckentlastungseinrichtung (18) nach Anspruch 5, **dadurch gekennzeichnet, dass** durch Umkehrung der Drehrichtung (40) der Exzenterwelle (20) die Funktionen der Exzenterabschnitte (24, 24') jeweils ein- und ausschaltbar sind.

7. Schaltbare Druckentlastungseinrichtung (18) nach einem der vorhergehenden Ansprüche, **dadurch gekennzeichnet, dass** die Schmiereinrichtung (1) mehr als eine Förderleitung (7) aufweist und jeder Förderleitung (7) jeweils ein erster und ein zweiter Exzenterabschnitt (24, 24') mit der entsprechenden Exzenterhülse (28, 28') zugeordnet sind, wobei alle Exzenterabschnitte an der gleichen Exzenterwelle (20) angeordnet sind.

## Claims

1. A switchable pressure relief device (18) of a lubricating device (1), containing a lubricant supply tank (6) and a lubricant pump (2) that is drivable by a drive motor (4), wherein the lubricating device (1) feeds lubricant via at least one supply line (7), the lubricant pump (2) is driven by a drive shaft, the drive shaft is embodied as an eccentric shaft (20) having an eccentric portion (24, 24') located eccentrically to an axis of rotation (22) of the eccentric shaft (20) and the eccentric shaft (20) actuates a pressure relief device (13), **characterized in that** the eccentric shaft (20) has at least two eccentric portions (24, 24'), and an eccentric tube (28, 28') is supported rotatably on each eccentric portion (24, 24'), and the eccentric tube (28, 28') and the respective eccentric portion (24, 24') form the rotary-direction-dependent eccentric drive (18).

2. The switchable pressure relief device (18) of claim 1, **characterized in that** a first and a second eccentric portion (24, 24') and a first and a second eccentric tube (28, 28'), which form a first and a second eccentric drive (18), are located along the eccentric shaft (20), and that the first and the second eccentric drives (18) are active in different directions of rotation of the eccentric shaft.

3. The switchable pressure relief device (18) of claim 1 or 2, **characterized in that** an eccentric tube (28, 28') is rotatably supported on the respective eccentric portion (24, 24'), and by means of a rotation about the eccentric portion (24, 24') about an angle of less than or equal to 180°, the eccentric tube (28, 28') is located eccentrically against a first stop in a first position relative to the axis of rotation (22) of the eccentric shaft (20), and by reverse rotation of the eccentric shaft (20) against a second stop, the eccentric tube (28, 28') is located concentrically in a second position relative to the axis of rotation (22) of the eccentric shaft (20).

4. The switchable pressure relief device (18) of claim 1, 2 or 3, **characterized in that** the first eccentric portion (24) with the corresponding eccentric tube (28) serves feed lubricant through the supply line (7), and the second eccentric portion (24') with the corresponding eccentric tube (28') serves to relieve pressure in the supply line (7).

5. The switchable pressure relief device (18) of claim 4, **characterized in that** when the function of the first eccentric portion (24) is on, the function of the second eccentric portion (24') is off, and when the function of the first eccentric portion (24) is off, the function of the second eccentric portion (24') is on.

6. The switchable pressure relief device (18) of claim 5, **characterized in that** by reversing the direction of rotation (40) of the eccentric shaft (20), the functions of the eccentric portions (24, 24') can each be switched on and off.

7. The switchable pressure relief device (18) of one of the foregoing claims, **characterized in that** the lubricating device (1) has more than one supply line (7), and each supply line (7) has a first and a second eccentric portion (24, 24'), respectively, associated with the respective eccentric tube (28, 28'), and all the eccentric portions are located on the same eccentric shaft (20).

## Revendications

1. Dispositif de détente (18) commutable d'un dispositif de lubrification (1), comprenant un réservoir de lubrifiant (6) et une pompe de lubrifiant (2) apte à être entraînée par un moteur d'entraînement (4), ledit dispositif de lubrification (1) refoulant du lubrifiant par au moins une conduite de refoulement (7), ladite pompe de lubrifiant (2) étant entraînée par un arbre d'entraînement, ledit arbre d'entraînement étant réalisé comme arbre d'excentrique (20) ayant un tronçon d'excentrique (24, 24') disposé de façon excentrique par rapport à un axe de rotation (22) de l'arbre d'excentrique (20) et ledit arbre d'excentrique (20) actionne un dispositif de détente (13), **caractérisé par le fait que** ledit arbre d'excentrique (20) présente au moins deux tronçons d'excentrique (24, 24'), une douille d'excentrique (28, 28') étant logée à rotation sur chaque tronçon d'excentrique (24, 24'), et ladite douille d'excentrique (28, 28') forme avec le tronçon d'excentrique (24, 24') respectif l'entraînement à excentrique (18) dépendant du sens de rotation.

2. Dispositif de détente (18) commutable selon la revendication 1, **caractérisé par le fait que** le long de l'arbre d'excentrique (20) sont disposés des premier et deuxième tronçons d'excentrique (24, 24') ainsi que des première et deuxième douilles d'excentrique (28, 28') qui forment des premier et deuxième entraînements à excentrique (18) et que lesdits premier et deuxième entraînements à excentrique (18) sont actifs dans des sens de rotation différents de l'arbre d'excentrique.

3. Dispositif de détente (18) commutable selon la revendication 1 ou 2, **caractérisé par le fait qu'**une douille d'excentrique (28, 28') est logée à rotation sur le tronçon d'excentrique (24, 24') respectif, ladite douille d'excentrique (28, 28') étant disposée dans une première position, par une rotation autour du tronçon d'excentrique (24, 24') d'un angle inférieur ou égal à 180° contre une première butée, de façon excentrique par rapport à l'axe de rotation (22) de l'arbre d'excentrique (20), et, en retournant l'arbre d'excentrique (20) contre une deuxième butée, la douille d'excentrique (28, 28') étant disposée, dans une deuxième position, de façon concentrique par rapport à l'axe de rotation (22) de l'arbre d'excentrique (20).

4. Dispositif de détente (18) commutable selon la revendication 1, 2 ou 3, **caractérisé par le fait que** le premier tronçon d'excentrique (24) avec la douille d'excentrique (28) correspondante sert à refouler du lubrifiant à travers ladite conduite de refoulement (7) et que le deuxième tronçon d'excentrique (24') avec la douille d'excentrique (28') correspondante sert à détendre ladite conduite de refoulement (7).

5. Dispositif de détente (18) commutable selon la revendication 4, **caractérisé par le fait que**, lorsque la fonction du premier tronçon d'excentrique (24) est allumée, la fonction du deuxième tronçon d'excentrique (24') est éteinte et que, lorsque la fonction du premier tronçon d'excentrique (24) est éteinte, la fonction du deuxième tronçon d'excentrique (24') est allumée

6. Dispositif de détente (18) commutable selon la revendication 5, **caractérisé par le fait que**, en inversant le sens de rotation (40) de l'arbre d'excentrique (20), les fonctions des tronçons d'excentrique (24, 24') peuvent être allumées et éteintes respectivement.

7. Dispositif de détente (18) commutable selon l'une quelconque des revendications précédentes, **caractérisé par le fait que** ledit dispositif de lubrification (1) présente plus d'une conduite de refoulement (7) et à chaque conduite de refoulement (7) est associé respectivement un premier et un deuxième tronçon d'excentrique (24, 24') avec la douille d'excentrique (28, 28') correspondante, tous les tronçons d'excentrique étant disposés sur le même arbre d'excentrique (20).
